Europäisches Patentamt

European Patent Office

Office européen des brevets

(11) Publication number: **0 322 104**
**A2**

# (12) EUROPEAN PATENT APPLICATION

(21) Application number: **88310856.5**

(22) Date of filing: **17.11.88**

(51) Int. Cl.⁴: **G06F 15/40**

(30) Priority: **23.12.87 US 138534**

(43) Date of publication of application:
**28.06.89 Bulletin 89/26**

(84) Designated Contracting States:
**DE FR GB**

(71) Applicant: **International Business Machines
Corporation
Old Orchard Road
Armonk, N.Y. 10504(US)**

(72) Inventor: **Macphail, Margaret Gardner
2105 Tower Drive
Austin Texas(US)**

(74) Representative: **Hawkins, Anthony George
Frederick
IBM United Kingdom Limited Intellectual
Property Department Hursley Park
Winchester Hampshire SO21 2JN(GB)**

(54) **Method of operating an electronic information processing system for filing folders therein.**

(57) This invention relates to a method of filing a document as a folder in an information processing system for managing a group of documents included in the folder. An end user indicates to the system that a document is to be created as a folder. A number of documents are identified which are to be included in the folder document. A logical relationship is then specified for the identified documents. The identified documents are then filed in the folder having the logical relationship relating to the order which the documents will be stored therein. Thereafter, the folder is filed in the information processing system.

**F I G. 1**

# METHOD OF OPERATING AN ELECTRONIC INFORMATION PROCESSING SYSTEM FOR FILING FOLDERS THEREIN

This invention relates to methods of managing documents in an electronic information processing system and more particularly, to methods of filing a document within a folder in the information processing system.

In recent times, automation of offices is rapidly becoming a reality for an increasing number of organizations. Office automation helps the organizations integrate data files with text, store and retrieve correspondence and reports electronically, distribute documents electronically and support the day-to-day activities of administrative personnel, professionals and managers.

While some of the benefits of electronic document processing can be realized from a single, stand-alone office system, a network which connects office systems in various locations in the organization increases the productivity of the organization. Physically, a network is a combination of interconnected pieces of equipment and programs used for moving information between points where it may be generated, processed, stored and used. From the viewpoint of an user of the network, the network is a collection of services which are useful in creating, revising, distributing, filing and retrieving documents.

In today's electronic office, documents are physically grouped or stored using one of two following techniques: partition data sets and directories. Partition data sets are storage areas on a disk or other form of storage medium. Documents stored in a partition data set only exist in that storage area and partition data can not be deleted until all of the documents included therein have been removed. Generally, the documents are filed in the partition data set in the order created and there is no other relationship regarding the order to the documents.

Directories are similar to partition data sets in that they are physical storage areas for documents for files. Documents can not exist in more that one physical storage area. The documents contained in a directory are not logical organized.

In regards to both the partition data sets and the directories, if one filed a group of documents which are related to a general topic and one wanted to review the group of documents, one would have to first locate the partition data set or sets or the directory or directories containing the documents. This type of retrieval technique reduces the efficiency of the electronic office. In partition data sets and directories, documents have to be deleted from the bottom up. Moreover, it is very difficult to re-arrange documents stored or grouped using these techniques. In re-arranging documents using these techniques, documents have to be copied and then deleted. Additionally, documents stored using these techniques are limited to one organization. Directories and partition data sets are not documents themselves. Thus, they can not provide a hierarchical relationship among the documents. Directories are hierarchically organized but they are merely node points and not documents. Since directories are only node points, there is no direct hierarchical relationship between the documents stored or grouped therein.

Consequently, what is needed is method of organizing documents in hierarchical and linear relationships by grouping them into folders.

According to the invention there is provided a method of operating an electronic information processing system arranged to store and process data in the form of documents comprising the steps of:

grouping documents into folders and storing the grouped documents within each folder in a specified order; storing, with each folder, data relating the dockets in the folder hierarchically; and retrieving data from the folders by reference to the hierarchical relationship.

A preferred embodiment of the invention will now be described, by way of example, with reference to the accompanying drawings, in which:-

Fig. 1 is a block diagram of a document management system in accordance with the principles of the present invention;

Fig. 2 is a model of a document showing the various objects associated with the document stored in the system of Fig. 1;

Fig. 3 to 5 are object structures which are employed in generating a folder document; and

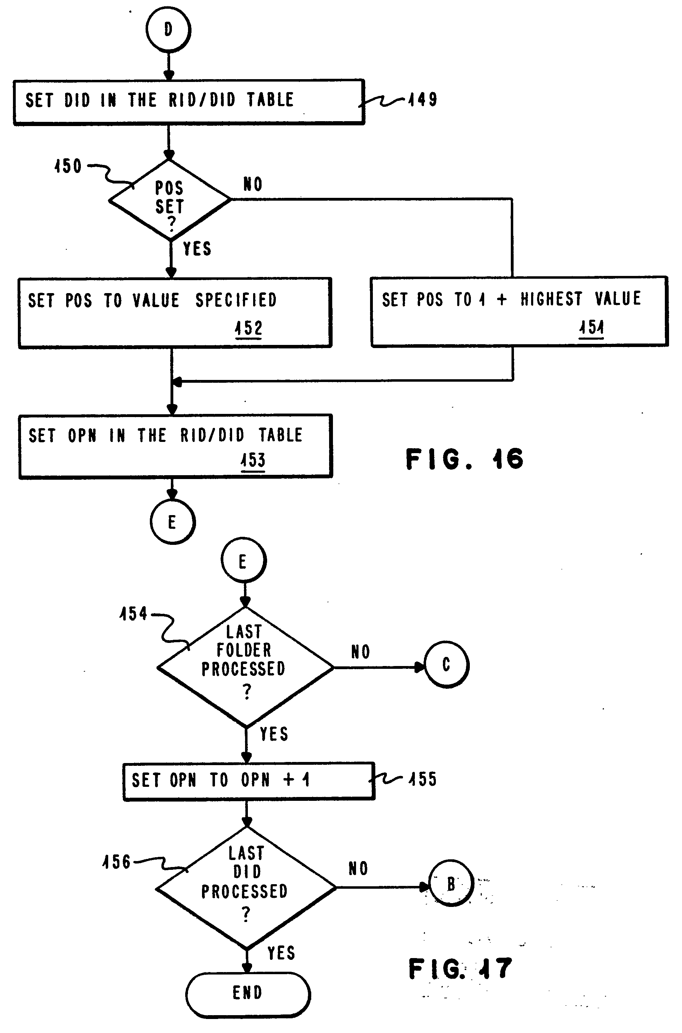

Figs. 6 to 20 are various flow charts illustrating detailed steps of the method of the present invention.

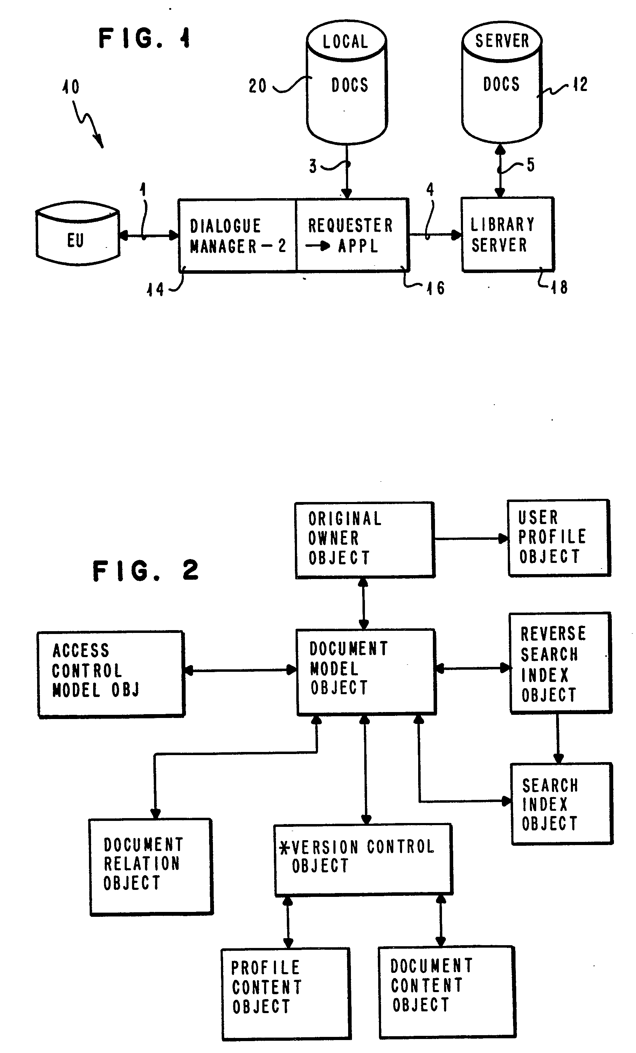

Fig. 1 shows a document management system 10 for controlling the creation, retrieval, editing and distribution of documents within an information processing system. The document management system 10 enables an end user (EU) to create a document which includes a plurality of identified documents stored therein. The created document is hereinafter referred to as a folder. The identified documents are organized in a linear and hierarchical manner. Subsequent operations can be performed on the entire folder. In essence, the folder and all of the documents contained within the folder can be retrieved or printed by referring only to the folder. The end user indicates to the system that a folder is to be created and further indicates the documents to be include therein. Thus, the EU creates the folder and files it into a library 12. Subsequent operations involving the folder created can be performed on the entire folder without retrieving all of the individual documents stored therein. The EU interacts with a dialog manager application 14 which provides all of the data or screens necessary to create the folder with the documents. For example, the dialog manager application will present a screen which allows the EU to enter any access control for the folder, any contextual-search characteristics, the identification of a requester/principle of the folder, and the definition of the folder. The definition of the folder includes an ordering criteria for the documents to be included in the folder, an indication that a document is included in a particular folder, any document-in-folder attributes of the document to be filed including whether or not history is to be maintained on the document and any pointers or addresses of the physical location of all of the documents to be filed in the folder. The physical location includes a document content and any document descriptors for the folder. The documents can be directly accessible to a requester application program 16 or accessible to the requester's library server 18. After the dialogue manager application 14 has gathered the above-identified information, it transmits the information to the requester application program 16.

The requester application application program 16, in response to input from the dialogue manager application 14, builds a request in the form of a file and transmits the request to the library server 18. The requester application program 16 makes a copy of each of the documents identified by the EU which are accessible thereto in a local storage medium 20. The copies of the documents are transmitted to the library server 18 along with the request. Additionally, the requester application program 16 transmits pointers to the physical location of all of the documents to be filed. Copies of all of the documents specified in the request and stored in the local storage medium 20 will be transmitted with the request. The requester application program 16 also transmits pointers to any other documents to be filed in the folder which are accessible to the library server 18 such as the library 12.

The library server 18 files the folder into the library 12 as specified by the EU. Access control will be established and any contextual-search characteristics will be enabled as specified. The documents transmitted with the folder request will be filed with the appropriate access control and contextual-search characteristics. Data objects associated with the folder document will be established to reflect the ordering criteria and the order of any documents currently filed in the folder. The history and open attributes for the folder document will be established and any history attributes for any of the documents filed therein will be established. Thereafter, the data objects associated with the documents contained in the folder document will be set to reflect that the document is contained within the folder document being created.

The document management system 10 shown in Fig. 1 utilizes a uniform structure for exchanging information within the system. This structure includes an encoding scheme which is designed to convey any document, irrespective of its content, from one type of office system to another and to communicate the intent of the person creating or transmitting a document as to the method of processing thereof. One type of structure which meets all of these requirements is the Document Interchange Architecture (DIA) which is a part of the DISOSS office system marketed by the International Business Machines Corporation.

DIA is a program-to-program communication architecture which defines the protocols and data structures that enable programs to interchange information such as documents and messages in a consistent and predictable manner. DIA is independent of the type of information managed by DIA services. DIA includes documents objects which contain parameters or descriptors that describe the contents of the information being transmitted. The descriptors contained in the objects include the name under which the information is to be filed, the authors, the subject of the information and the date the information was filed in the document history. These descriptors enable a document to be searched in a storage medium such as the server library 12.

The server library 12 performs various services for the system 10. These services are used for storing and retrieving documents electronically. Whenever a document is filed in the server library 12, a set of descriptors called a document profile is filed with it. The profile contains the descriptors noted above. Document profiles are used in searching for documents in the library 12. For purposes of illustration and not limitation, a EU can ask the system 10 to search for all documents regarding a particular subject and by a certain author which was filed in the library 12 between any two dates. Upon completing the search, the system presents the EU with a list of the documents which meet the search criteria. The EU could then ask the system 10 to retrieve a copy of a specific document on the list from the library an deliver the copy the EU for printing or viewing.

The server library 12 also provides the following services: file documents in and retrieve or delete documents from the library; update work in progress documents in the library; specify a security level to associate with the document that is being filed; allow authorized end users other than the EU who filed the document to retrieve the document from the library and perform searches for and retrieve documents in the library for other end users. The server library 12 assigns each new document filed therein a unique name called a library-assigned document name (LADN). This name is returned to the requester and can be used to uniquely identify the document at some later time.

Referring to Fig. 2, each document stored in the server library 12 includes the objects shown therein. All of the objects shown in Fig. 2 are created in response to the processing a FILE command. A document model object contains information concerning ownership and attributes of a specific document. This object controls the access to the document during its life in the library.

An original owner object contains or points to information used by an owner of the document to control access to the document as filed.

A document content object provides for the storage of the document content and for saving information relating to the actual size of the filed document.

The document model includes a plurality document objects. Folder data areas and the document-in-folder data areas are separated from the document content and document descriptor areas. This separation of the data structures allows a document to be a folder and to be within a folder.

A document relation object describes the logical relationships between the document and other documents. If the document is a folder, each of the documents contained therein has a pointer or LADN entry in this object. If this document is in one or more folders, then each folder has a pointer or LADN entry in this object. Enter and remove history may be maintained for the document either as a folder or as a document in other folders.

An access control model object is created when the document owner authorizes other users to access the document.

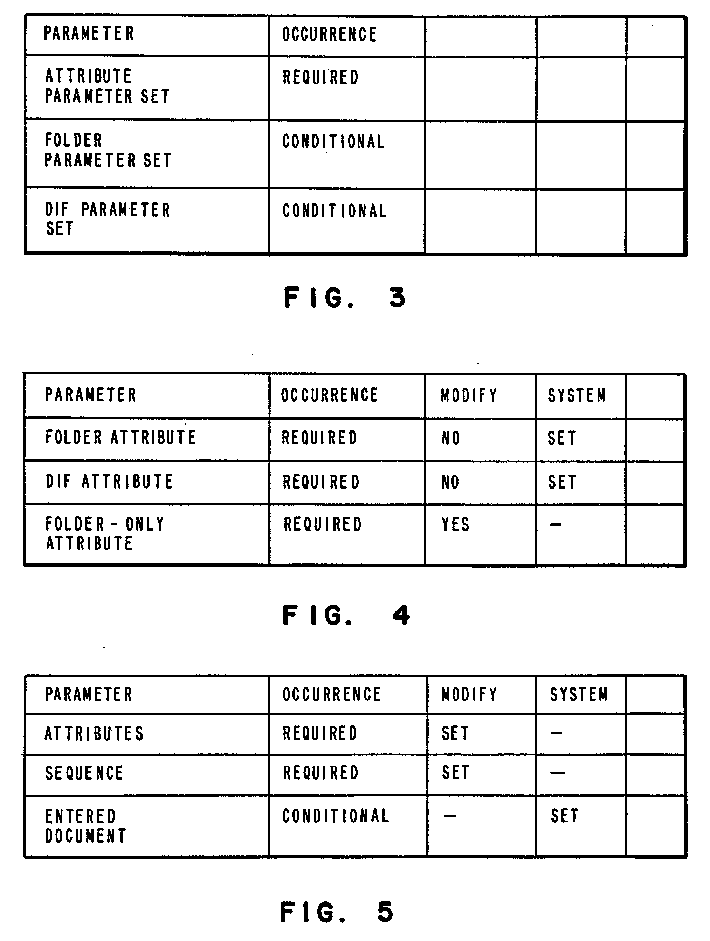

Structures for all of the above-identified objects except document relations object are a part of the DISOSS office system and will not be described herein. Fig. 3 shows the structure of the document relation object which consists of the following: an attribute parameter set and a folder document section, a document-in-a-folder section.

The attribute parameter set indicates whether or not the document associated with the document relation object is a folder or whether or not the document is a 'folder-only' document. Fig. 4 illustrates the structure for the attribute parameter set. A folder attribute indicates whether or not the document associated with the document relation object is a folder. If the document is a folder, then a folder section parameter set is required. A DIF (document in folder) attribute indicates whether or not the document is contained within any folders. A folder-only attribute indicates whether or not the document can be viewed as existing on its own when it is included within a folder. Documents are viewed as folder-only when both the DIF and Folder-only attributes are positively set.

A physical document in a physical folder is a folder-only document. In essence, the physical document exists in the folder and can not stand on its own. However, electronic documents can logically exist in multiple places at the same time. Therefore, a document can appear to be in more than one folder and standing on its own all at the same time. Whether or not the document can stand on its own when it is also in a folder is indicated by the folder-only attribute. Folder-only documents are viewed as stand-alone when they are not contained by any folders.

The folder document section includes the following sections: folder attributes and entered document parameters set. The folder attributes indicates the folder characteristics such as ordering criteria and history. Each document entered into the folder document associated with the document relation object will have an entered document parameter set. Fig. 5 illustrates the structure for the folder document section. The attributes parameter allows for the specification of an open option and the history option. The folder is open so that documents can be entered into or removed from the folder after it has been filed in the server library 12. As documents are entered into and removed from the open folder, the history option is specified by an entered document parameter. The entered document parameter is deleted when a document is removed from the folder and is created when the same document is reentered into the folder. The removal date and time and the requester's ID are added to the entered document parameter set. When the document is re-entered into the folder, the date and time and the requester's ID is added to the entered document parameter set.

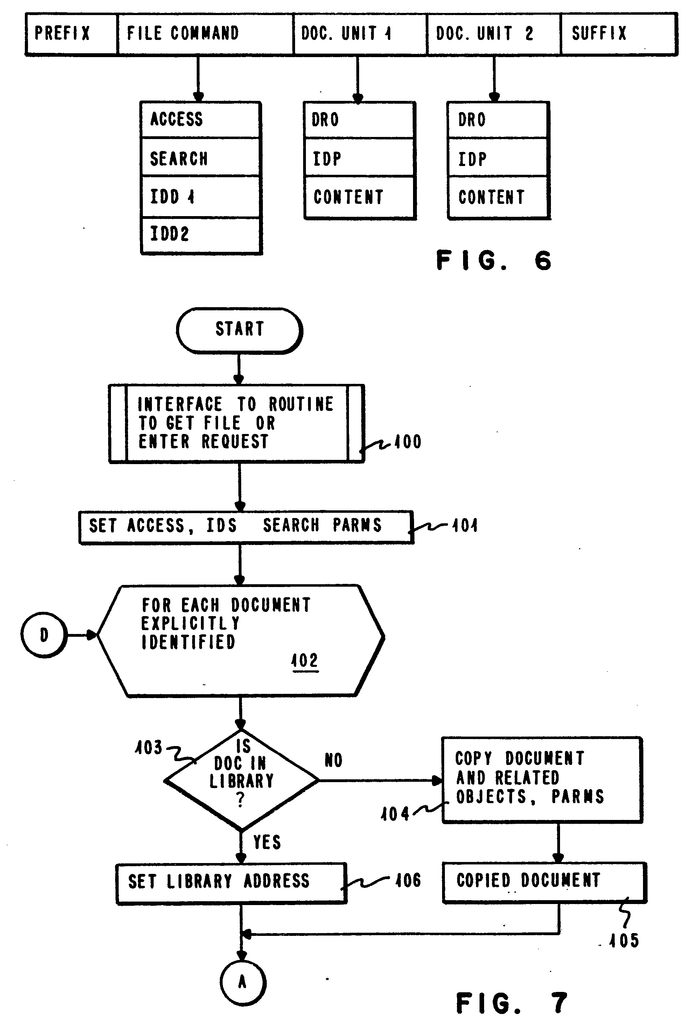

Fig. 6 shows a structure for a file command used by the present system in creating the folder in the information processing system. The file command includes a file command section and at least one document unit section. The file command section includes information relating to any access and search criteria entered by the EU. For purposes of illustration and not limitation, the file command structure

4

includes two document unit section. Each of the document unit sections is associated with respective documents to be included in the folder. Thus, the number of the documents unit sections will vary depending on the number of documents to be included in the folder. Similarly, the file command section includes two identified data (IDD) operands. An IDD1 operand is associated with the first document, the folder, specified by the EU. The IDD1 operand includes a unique identifier for the folder within the context of the command and a physical pointer which points to document unit 1. An IDD2 operand is associated with the second document specified by the EU to be included in the folder. Similarly, the IDD2 operand includes a unique identifier for the second document within the context of the command, an indicator that the second document is to be entered into the folder document represented by IDD1 and a physical pointer which points to document unit 2. Document unit 1 includes a document relation object (DRO). The DRO includes any relation attributes, folder attributes, a folder table-of-contents framework which is empty if the folder is being created, and a document-in-folder table-of-contents framework which is also empty if the folder is being created. Document unit 1 further includes an interchange document profile (IDP) which contains descriptive information regarding the document. Document unit 2 includes also a DRO and an IDP. The DRO associated with document unit 2 includes relation attributes and a document-in-folder table-of-contents framework.

As noted above, the document model includes a plurality document objects. Folder data areas and the document-in-folder data areas are separated from the document content and docket descriptor areas. This separation of the data structures allows a document to be a folder and to be within a folder.

Set out below is an illustration of an application program usable by the requestor application in filing a folder in the information processing system. The program is in program design language from which source code and machine code are derivable.

```
BEGIN REQUESTER PROC

        INPUT

            ACCESS CONTROL INFORMATION

            CONTEXTUAL-SEARCH CHARACTERISTICS
```

```
DO FOR EACH DOCUMENT SPECIFIED IN THIS
        REQUEST

        A POINTER TO THE PHYSICAL DOCUMENT
        (PPTR) WHICH WILL BE THE LOCAL POINTER
        OR THE LIBRARY IDENTIFIER.

        A UNIQUE IDENTIFIER FOR THIS DOCUMENT
        WITHIN THE SCOPE OF THIS REQUEST (DID).

        A REFERENCE IDENTIFIER FOR EACH FOLDER
        CONTAINING THIS DOCUMENT, IF THIS
        DOCUMENT IS TO BE INCLUDED WITHIN A
        FOLDER (RID).

        A POSITION INDICATOR FOR THE POSITION
        THIS DOCUMENT WILL TAKE IN THE
        REFERENCED FOLDER, IF THIS DOCUMENT IS
        TO BE INCLUDED WITHIN A FOLDER (POS).

        ATTRIBUTES FOR THE DOCUMENT (HISTORY).

        ATTRIBUTES FOR THE FOLDER (HISTORY,
        ORDER, OPEN)
    ENDDO
PROCESS
    SET THE ACCESS CONTROL.
    SET THE CONTEXTUAL-SEARCH CHARACTERISTICS.
    SET THE REQUESTER AND PRINCIPAL IDENTIFIERS.
    DO FOR EACH DOCUMENT (IDD OR RDD) EXPLICITLY
        SPECIFIED IN THE REQUEST
            IF THE DOCUMENT DOES NOT EXIST IN
                THE LIBRARY,
                THEN
                    COPY THE DOCUMENT.
```

```
                    SET THE DOCUMENT
                    ADDRESS TO POINT TO THE
                    POSITION OF THE DOCUMENT
                    IN THE REQUEST UNIT.

                    SET UP THE DATA OBJECT
                    (DRO) WHICH WILL CONTAIN
                    THE UNIQUE LIBRARY
                    IDENTIFIER FOR THE
                    FOLDERS WHICH CONTAIN
                    THIS DOCUMENT.

                    SET THE DOCUMENT-IN-
                    FOLDER ATTRIBUTES
                    (HISTORY) IN THE DRO AS
                    SPECIFIED.

            IF THE DOCUMENT IS A FOLDER,
                THEN
                    SET THE FOLDER
                    ATTRIBUTES (HISTORY,
                    ORDER, OPEN) IN THE DRO
                    AS SPECIFIED.

                    SET UP THE DATA OBJECT
                    WHICH WILL CONTAIN THE
                    UNIQUE LIBRARY
                    IDENTIFIERS FOR THE
                    DOCUMENTS CONTAINED
                    WITHIN THIS FOLDER.
                ENDIF
            ENDIF
            SET SPECIFIED IDENTIFIER FOR THIS
                    DOCUMENT (DID).
            DO FOR EACH FOLDER (RID)
```

```
                    CONTAINING THIS DOCUMENT:

                        SET THE RID FOR THIS FOLDER

                        FOR THIS IDD OR RDD.

                        IF A POSITION IS EXPLICITLY

                            SPECIFIED FOR THIS DOCUMENT

                            WITHIN THIS FOLDER, THEN

                                SET SPECIFIED POSITION

                                (POS) FOR THIS DOCUMENT

                                CORRESPONDING TO THIS

                                RID.

                        ENDIF

                    ENDDO

            ENDDO

        END REQUESTER PROC
```

When the requester application program 16 receives data from the dialogue manager 14, it builds operands specifying the access contextual-search characteristics, requester and principal identifiers for all of the documents filed with the file command. For each document specified in the request, an IDD operand is built. If the document presently exist in the library 12, only a reference data (RDD) operand is built. Both operands include the following: a pointer (PPTR) to the physical location of the document wherein the RDD will contain a library pointer and the IDD will contain a pointer to the document unit contained within the request; a unique document identifier (DID) within the scope of the command ; any references to the folder or folders containing each of the documents (RID = DID of the folder); and any positions (POS) specified for each of the documents within the referenced RID folders. The requester application program 16 then builds the IDD operand for each new document. Data areas associated with each of the documents are then built. The DRO contains data for the documents contained within the folder (DIFTOC), the ordering criteria for the folder, other folder attributes, and a list of documents contained within the folder (FTOC). Additionally, the DRO contains the history attribute for the documents contained within the folder. A document-in-folder table of contents (DIFTOC) contains the data for the documents contained in the folder.

Set out below is an illustration of an application program usable by the library server 18 in filing a folder in the information processing system. The program is in program design language from which source code and machine code are derivable.

```
BEGIN LIBRARY SERVER PROC
        INPUT
                ACCESS CONTROL INFORMATION FROM REQUESTER
                APPLICATION.
                CONTEXTUAL-SEARCH INFORMATION.
                REQUESTER/PRINCIPLE IDENTIFIERS.
                DO FOR EACH DOCUMENT SPECIFIED IN THIS
                        REQUEST BUILD AN IDD OPERAND OR A RDD
                        OPERAND WHICH INCLUDES:
                        A POINTER TO THE PHYSICAL DOCUMENT
                        (PPTR) WHICH WILL BE EITHER THE LOCAL
                        POINTER (IDD OPERAND) OR THE LIBRARY
                        IDENTIFIER (RDD OPERAND).


                        AN UNIQUE IDENTIFIER FOR THIS DOCUMENT
                        WITHIN THE SCOPE OF THIS REQUEST (DID).


                        A REFERENCE IDENTIFIER FOR EACH FOLDER
                        CONTAINING THIS DOCUMENT, IF THIS
                        DOCUMENT IS TO BE CONTAINED WITHIN A
                        FOLDER (RID).


                        A POSITION INDICATOR FOR THE POSITION
                        THIS DOCUMENT WILL TAKE IN THE
                        REFERENCED FOLDER, IF THIS DOCUMENT IS
                        TO BE CONTAINED WITHIN A FOLDER (POS).
```

9

```
A DOCUMENT RELATION OBJECT (DRO)
CONTAINING THE FOLLOWING:
        DOCUMENT RELATION ATTRIBUTE.
        ORDERING CRITERIA AND OTHER FOLDER
        ATTRIBUTES, IF THE SPECIFIED
        DOCUMENT IS A FOLDER TO BE CREATED
        WITH THIS REQUEST.
        DOCUMENT-IN-FOLDER ATTRIBUTES.
        A DOCUMENT-IN-FOLDER
        TABLE-OF-CONTENTS (DIFTOC) AREA
        WHICH WILL BE SET UP BUT WILL NOT
        CONTAIN ANY ENTRIES.
        A FOLDER TABLE-OF-CONTENTS (FTOC)
        AREA WHICH WILL BE SET UP BUT WILL
        NOT CONTAIN ANY ENTRIES.
    ENDDO
PROCESS
    CALL BUILD TABLE PROC FOR DID/LADN AND
    RID/DID TABLES.
    DO FOR EVERY FOLDER (RID ENTRY):
        DO FOR EVERY DOCUMENT (DID) TO BE
          PLACED IN THIS FOLDER:
            FIND THE ENTRY POSITION FOR THIS
            DID ACCORDING TO THIS FOLDER'S
            ORDERING CRITERIA IN THE FOLDER'S
            TABLE-OF-CONTENTS.
            ENTER THE LADN ASSOCIATED WITH
            THIS DID IN THE FOLDER'S
            TABLE-OF-CONTENTS.
            IF HISTORY IS SPECIFIED FOR THIS
              FOLDER,
              THEN
                  SET THE REQUESTER'S ID IN THE
                  HISTORY PORTION OF THE ENTRY.
                  SET THE PRINCIPAL'S ID IN THE
```

```
                        HISTORY PORTION OF THE ENTRY.

                        SET THE CURRENT DATE AND TIME

                        IN THE HISTORY PORTION OF THE

                        ENTRY.

                  ENDIF

                  ENTER THE LADN ASSOCIATED WITH

                  THIS FOLDER (RID) IN THE

                  DOCUMENT-IN-FOLDER

                  TABLE-OF-CONTENTS.

                  IF HISTORY IS SPECIFIED FOR THIS

                  DOCUMENT,

                        THEN

                              SET THE REQUESTER'S ID IN THE

                              HISTORY PORTION OF THE ENTRY.

                              SET THE PRINCIPAL'S ID IN THE

                              HISTORY PORTION OF THE ENTRY.

                              SET THE CURRENT DATE AND TIME

                              IN THE HISTORY PORTION OF THE

                              ENTRY.

                        ENDIF

               ENDDO

            ENDDO

         END PROCESS

      END LIBRARY SERVER PROC
```

As noted above, each document operand (RDD or IDD) has the unique identifier (DID) assigned thereto. The library server 18 then gets a LADN for every document explicitly specified in the request. A BUILD TABLE PROC is called to build a temporary table to match every DID to an associated LADN. Moreover, each document operands which corresponds to a document that will be placed into the folder includes a reference (RID) to the folder's unique document identifier DID. The RID with the document operand is set to the value of the folder operand's DID. The library server 18 then facilitates the building of a temporary table containing an entry for every folder referenced. Each folder entry will contain a list of DIDs representing the documents which are included within the folder. Each DID will be associated with an operand number (OPN) and a position (POS) in the folder. OPN is calculated by the library server since the original order of the operands may be used to determine the position of the documents within the folder if the POS value is not explicitly set by the requester application program 16.

For purposes of illustration and set forth in the table below, a folder with a DID of 1 contains two documents with DIDs of 2 and 3 in that order. A folder with DID of 4 contains two documents with DIDs of 2 and 5 in that order. The document operand for the DID = 2 document contains 2 RIDs. One for the folder defined with the document operand associated with DID = 1 and another for the folder associated with DID = 4. Additionally, the document operands are in the same order as the DID specification.

| RID | DID/POS/OPNs | |
|---|---|---|
| 1 | 2/1/2 | 3/2/3 |
| 4 | 2/1/2 | 5/2/5 |

Set out below is an illustration of an application program usable by the library server 18 in building the DID/LADN and RID/DID tables. The program is in program design language from which source code and machine code are derivable.

```
BEGIN BUILD TABLES PROC
    SET OPN TO A VALUE OF 1
    DO FOR EACH DOCUMENT SPECIFIED IN THE REQUEST:
        IF THE DOCUMENT DOES NOT EXIST IN THE
        LIBRARY,
        THEN
            COPY THE DOCUMENT AND ITS RELATED
            OBJECTS INTO THE LIBRARY.
            ASSIGN A UNIQUE LIBRARY IDENTIFIER TO
            THIS DOCUMENT (LADN).
```

```
            ELSE

                OBTAIN THE UNIQUE LIBRARY

                IDENTIFIER FOR THIS DOCUMENT (LADN).

            ENDIF

            SAVE THE UNIQUE IDENTIFIER FOR THE REQUEST

            (DID) WITH THE UNIQUE LIBRARY IDENTIFIER

            (LADN) IN DID/LADN TABLE.

            DO FOR EACH FOLDER REFERENCED (RID) BY THIS

                DOCUMENT OPERAND:

                IF THERE IS NO ENTRY IN THE RID/DID

                    TABLE,

                    THEN CREATE AN ENTRY FOR THIS RID

                ENDIF

                SET DID IN RID/DID TABLE

                IF POS IS SET, THEN

                    SET POS IN RID/DID TABLE

                        ELSE, SET POS = HIGHEST POSSIBLE

                            VALUE + 1 IN RID/DID TABLE

                ENDIF

                SET OPN IN RID/DID TABLE

            ENDDO

            SET OPN TO OPN + 1

        ENDDO

    END BUILD TABLE PROC
```

The library server 18 must keep track of the order in which document operands are specified. In positionally ordered folders wherein the position is not specified, the original operand order is the order in which the documents are placed in the folder. The library server 18 then builds an entry in the temporary table for every document specified in the IDD or RDD operand. Each entry matches a DID to a LADN. In addition, if the current document operand references a folder in which it will be included, the RID/DID temporary table is updated. The library server 18 then process the IDD if the document does not exist in the library 12. The document is then filed in the library 22 along with its associated data areas which includes the DRO and assigns a new LADN to the document. Thereafter, the library server 18 process the RID if the document does exist in the library 12 and builds the DID/LADN and the RID/DID entries in the temporary table. Document operands without a POS set that are placed in positionally ordered folders, go into the folder after the last document currently in the folder. The OPN is then updated for the next operand.

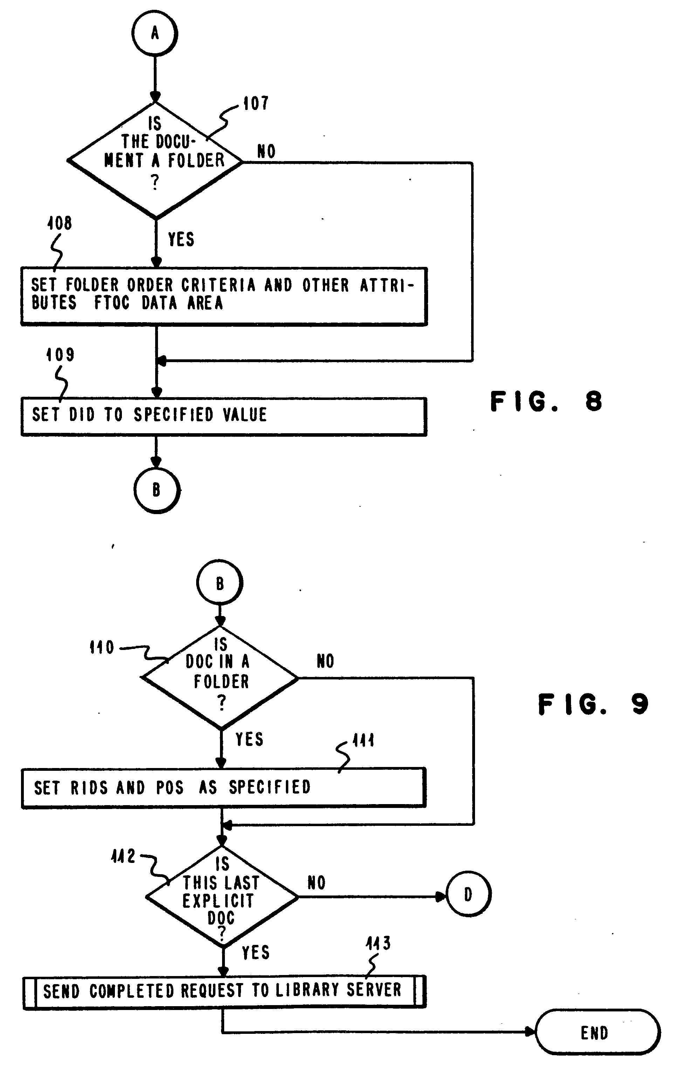

Figs 7, 8 and 9 show a flow chart for the requester application program 18 in filing a folder in the information processing system. First, the application program 18 in step 100 interfaces with the dialogue manager to get the request. The access information, identifiers and search parameters are set in step 101. In steps 102 and 103, a determination is made whether each of the documents specified in the request exist in the library 12. If the documents do not exist in the library 12, a copy of the document and its related objects is made in steps 104 and 105. If the documents exist in the library 12, the library address is set in step 106. Step 107 determines whether each of the specified documents is a folder. Step 108 sets the folder order criteria and other folder attributes and the DID is set to a specified value in step 109. If a specified document in step 107 is not a folder, the DID is set to a specified value in step 109. In step 110, a

13

determination is made whether each of the documents are included in an existing folder. If the document id a folder, the RIDs and POS are set in step 111 otherwise, control is transferred to step 112. In step 112, a determination is made whether the document is the last document specified in the request. If there are other documents to be processed, control is transferred to step 102. Otherwise, the requester application program 16 transmits the complete request to the library server 18 in step 113.

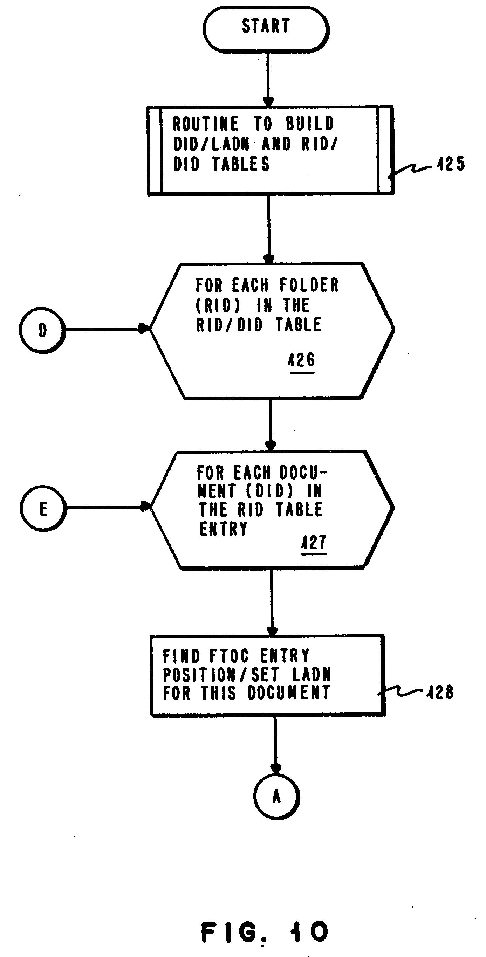

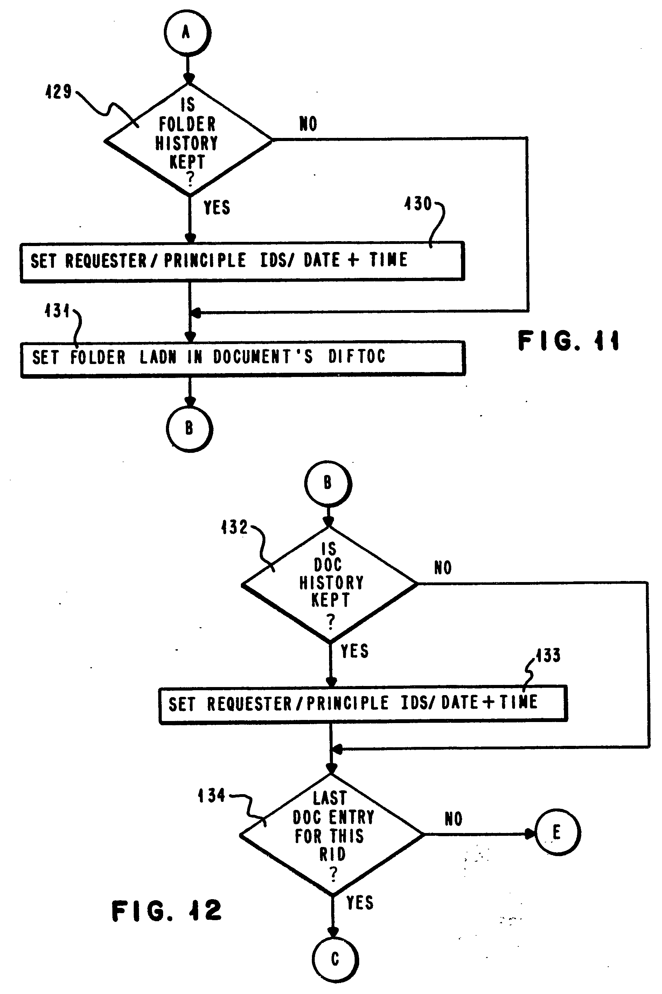

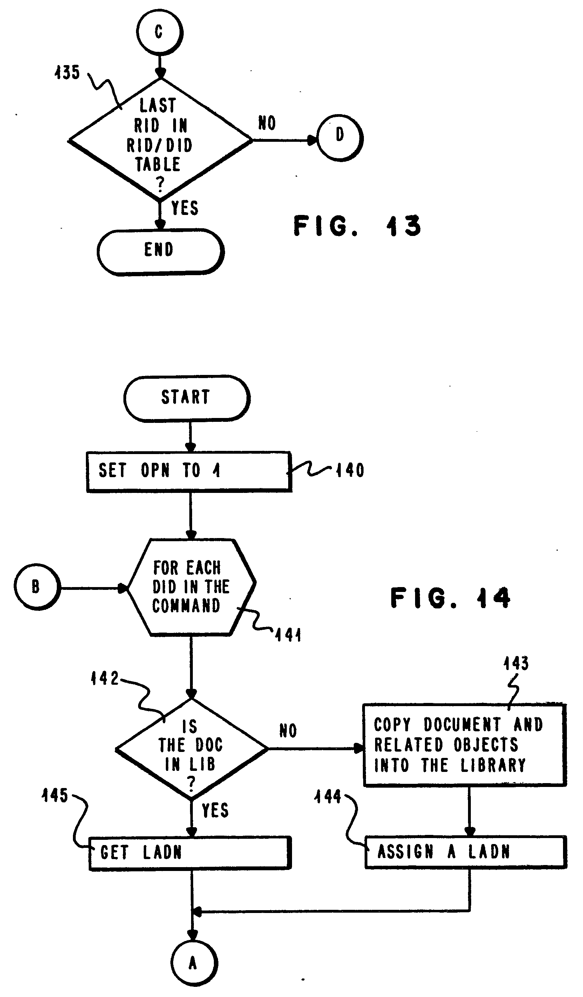

Referring to Figs. 10 to 13, there is illustrated a flow chart for the library server 18 in filing the folder in the library 12. In step 125, the library 18 server call the build tables routine to build the DID/LADN and RID/DID tables. In steps 126, 127 and 128, for each folder RID and each document DID in the RID/DID table, find folder table-of-contents entry position and set the LADN for this document. In step 129, if a folder history is to be maintained, the IDs of the requester and principal and the current date and time are set in step 130. The folder LADN are entered in the document-in-folder table-of-contents in step 131. In step 132, a determination is made as to whether a document history is to be maintained. The requester's ID and principal's ID and the date and time are set in step 133 if the document history is to be maintained. Step 134 determines if the last document entry has been processed for the RID. If there are other document entries to be processed, control is transferred to step 127. Otherwise, step 135 determines if the last RID in the RID/DID table has been processed. If there are other RIDs to process, control is transferred to step 126.

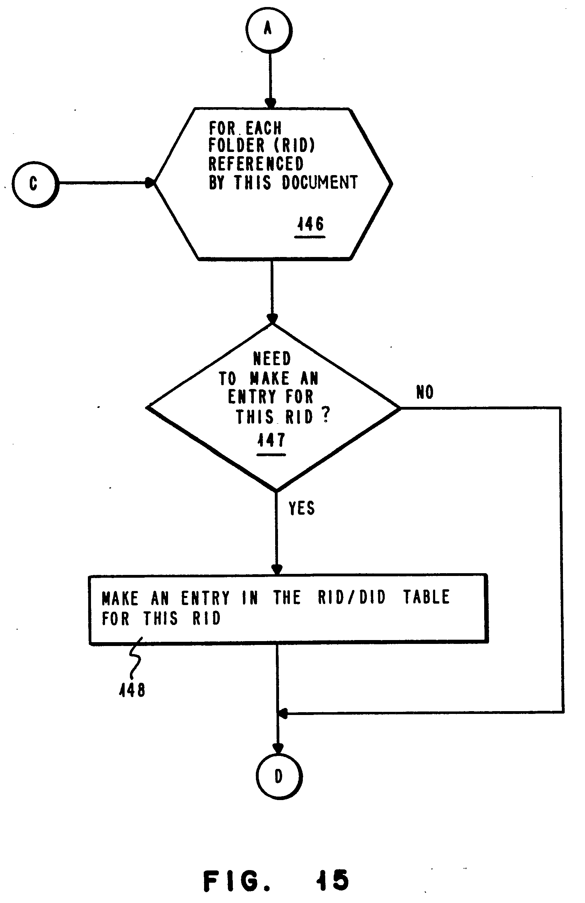

Referring to Figs. 14 to 17, there is illustrated a flow chart for the build table routine in generating the RID/DID and DID/LADN tables. As noted above, the build table routine is called by the library server 18. In step 140, the OPN is set to a value of one. For each DID in the call, a determination is made in steps 141 and 142 whether the document associated with each respective DID exists in the library 12. If the document is not in the library, a copy of the document and its related objects is made in step 143 and a LADN is assigned in step 144. Otherwise, the LADN for the document filed in the library 12 is fetched in step 145. For each folder RID referenced by the document, in steps 146 and 147, a determination is made as to whether an entry has to be made in the RID/DID table. An entry is made in the RID/DID table in step 148 if required. The DID is entered in the RID/DID table in step 149 and a determination is made in set 150 as whether the position indicator (POS) has been set. The POS is set to a value of one plus the highest possible value in the RID/DID table in step 151. If the POS has been previously specified, POS is set to the value specified in step 152. The document operand OPN is then set in the RID/DID table in step 153. In step 154, a determination is made whether the last folder has been processed. Control is transferred from step 154 to step 146 to process any remaining folders. Otherwise, OPN is incremented by a value of one in step 155. Step 156 determines whether the last DID has been processed. Control is transferred from step 156 to step 141 to process any remaining DIDs.

In summary what has been show is a method of filing a document as a folder in an information processing system for managing a group of documents included in the folder. An end user indicates to the system that a document is to be created as a folder. A number of documents are identified which are to be included in the folder document. A logical relationship is then specified for the identified documents. The identified documents are then filed in the folder having the logical relationship relating to the order which the documents will be stored therein. Thereafter, the folder is filed in the information processing system.

## Claims

1. A method of operating an electronic information processing system arranged to store and process data in the form of documents comprising the steps of:
grouping documents into folders and storing the grouped documents within each folder in a specified order;
storing, with each folder, data relating the dockets in the folder hierarchically; and
retrieving data from the folders by reference to the hierarchical relationship.

2. A method according to claim 1 in which said group step comprises the steps of:
identifying the documents to be included in a folder; and
specifying an order in which the identified documents are to be positioned within the stored folder.

3. A method according to claim 1 or claim 2 in which said folders are stored in linear relationship one with another.

4. A method according to any one of the previous claims including the step of accessing a docket comprising:
accessing the folder containing the docket linearly; and
accessing the docket within the folder hierarchically.

5. A method according to any one of the previous claims including steps of:

accessing a folder; and

inserting the document in the folder and adding hierarchical data relating to the inserted docket into the folder.

# FIG. 4

# FIG. 2

| PARAMETER | OCCURRENCE | | | |
|---|---|---|---|---|
| ATTRIBUTE PARAMETER SET | REQUIRED | | | |
| FOLDER PARAMETER SET | CONDITIONAL | | | |
| DIF PARAMETER SET | CONDITIONAL | | | |

## FIG. 3

| PARAMETER | OCCURRENCE | MODIFY | SYSTEM | |
|---|---|---|---|---|
| FOLDER ATTRIBUTE | REQUIRED | NO | SET | |
| DIF ATTRIBUTE | REQUIRED | NO | SET | |
| FOLDER - ONLY ATTRIBUTE | REQUIRED | YES | — | |

## FIG. 4

| PARAMETER | OCCURRENCE | MODIFY | SYSTEM | |
|---|---|---|---|---|
| ATTRIBUTES | REQUIRED | SET | — | |
| SEQUENCE | REQUIRED | SET | — | |
| ENTERED DOCUMENT | CONDITIONAL | — | SET | |

## FIG. 5

| PREFIX | FILE COMMAND | DOC. UNIT 1 | DOC. UNIT 2 | SUFFIX |
|--------|--------------|-------------|-------------|--------|

| ACCESS |
| SEARCH |
| IDD 1 |
| IDD2 |

| DRO |
| IDP |
| CONTENT |

| DRO |
| IDP |
| CONTENT |

**FIG. 6**

START

INTERFACE TO ROUTINE TO GET FILE OR ENTER REQUEST — 100

SET ACCESS, IDS SEARCH PARMS — 101

FOR EACH DOCUMENT EXPLICITLY IDENTIFIED  102

D

103 — IS DOC IN LIBRARY ?

NO → COPY DOCUMENT AND RELATED OBJECTS, PARMS — 104

YES

SET LIBRARY ADDRESS — 106

COPIED DOCUMENT — 105

A

**FIG. 7**

(A)

107

IS THE DOCU-MENT A FOLDER ?

NO

YES

408

SET FOLDER ORDER CRITERIA AND OTHER ATTRI-BUTES FTOC DATA AREA

109

SET DID TO SPECIFIED VALUE

(B)

**FIG. 8**

(B)

110

IS DOC IN A FOLDER ?

NO

YES

111

SET RIDS AND POS AS SPECIFIED

**FIG. 9**

112

IS THIS LAST EXPLICIT DOC ?

NO → (D)

YES

113

SEND COMPLETED REQUEST TO LIBRARY SERVER

END

START

ROUTINE TO BUILD
DID/LADN AND RID/
DID TABLES

425

D

FOR EACH FOLDER
(RID) IN THE
RID/DID TABLE

426

E

FOR EACH DOCU-
MENT (DID) IN
THE RID TABLE
ENTRY

427

FIND FTOC ENTRY
POSITION/SET LADN
FOR THIS DOCUMENT

428

A

F I G. 10

429

IS FOLDER HISTORY KEPT ? — NO

YES

430

SET REQUESTER / PRINCIPLE IDS/ DATE + TIME

131

SET FOLDER LADN IN DOCUMENT'S DIFTOC

B

**FIG. 11**

132

IS DOC HISTORY KEPT ? — NO

YES

133

SET REQUESTER / PRINCIPLE IDS/ DATE + TIME

134

LAST DOC ENTRY FOR THIS RID ? — NO — E

YES

C

**FIG. 12**

FIG. 13

FIG. 14

EP 0 322 104 A2

A

FOR EACH
FOLDER (RID)
REFERENCED
BY THIS DOCUMENT

C

146

NEED
TO MAKE AN
ENTRY FOR
THIS RID ?

NO

147

YES

MAKE AN ENTRY IN THE RID/DID TABLE
FOR THIS RID

148

D

F I G.   15

FIG. 16

FIG. 17